# FASCICULE DE BREVET EUROPEEN

(11) **EP 3 571 512 B1**
(45) Date de publication et mention de la délivrance du brevet: **01.05.2024**
(21) Numéro de dépôt: 18702765.1
(22) Date de dépôt: 17.01.2018
(51) Int. Cl.: G01N 35/00, G01N 35/04

(54) **SYSTÈME D'ANALYSES BIOLOGIQUES À TRAITEMENT DE PORTOIRS SPÉCIFIQUES**
BIOLOGISCHES ANALYSESYSTEM MIT BEHANDLUNG SPEZIFISCHER HALTER
BIOLOGICAL ANALYSIS SYSTEM WITH TREATMENT OF SPECIFIC HOLDERS

(30) Priorité: 19.01.2017 FR 1750431
(43) Date de publication de la demande: 27.11.2019
(73) Titulaire: Horiba ABX SAS, 34184 Montpellier Cedex 4 (FR)
(72) Inventeur: BEAUDUCEL, Florent, 34070 Montpellier (FR); BENEZETH, Philippe, 30132 Caissargues (FR); CRES, Thibault, 34740 Vendargues (FR)
(74) Mandataire: Cabinet Netter
(86) Numéro de dépôt international: PCT/FR2018/050112
(87) Numéro de publication internationale: WO 2018/134519

(56) Documents cités:
- EP-A1- 2 455 762
- EP-A2- 1 505 396
- WO-A1-2016/148167
- US-A1- 2006 245 865

## Description

L'invention concerne le domaine des analyses biologiques et leur automatisation.

Dans un laboratoire d'analyses biologiques, la gestion optimale du flux des échantillons est devenue un élément crucial. En effet, plus un laboratoire est grand, et plus il devient complexe et nécessaire de gérer au mieux le flux de prélèvements biologiques faisant l'objet des analyses. Deux critères sont particulièrement importants à considérer : le temps de traitement des échantillons et la charge de travail que chaque action induit au personnel de laboratoire.

Afin d'améliorer les performances selon ces critères, des systèmes d'analyses biologiques ont été développés, qui sont basés sur la mise en communication de plusieurs dispositifs d'analyses biologiques par le biais d'un moyen de transport de portoirs contenant des tubes d'échantillons. L'association de plusieurs dispositifs par le moyen de transport permet de mieux gérer les pannes, les situations à problèmes et de mettre en oeuvre certaines stratégies de gestion du débit.

Ces systèmes comprennent en général une entrée pour les portoirs, un moyen de transport qui distribue les portoirs en entrée à l'un des dispositifs qui lui est relié, et une sortie pour les portoirs ayant fait l'objet d'analyses. Certains systèmes peuvent comprendre une zone tampon en entrée et/ou en sortie, et mettre en oeuvre des algorithmes pour gérer le débit.

Cependant, ces systèmes peuvent être améliorés tant dans leur gestion du flux que dans l'encombrement qui les caractérise. En effet, il n'existe pas à ce jour de moyen efficace de traiter des portoirs dits spécifiques, c'est-à-dire devant être traités avec un degré de priorité différent de celui des tubes d'analyse classiques. Des solutions existent et consistent à créer des entrées spécifiques pour des portoirs prioritaires, ce qui pose des problèmes d'encombrement. Le document WO 2016/148167 A1 divulgue un analyseur ayant une entrée dédiée aux portoirs prioritaires.

L'invention vient améliorer la situation. À cet effet, elle propose un système d'analyses biologiques comprenant au moins une entrée et une sortie, au moins deux dispositifs d'analyses biologiques reliés entre eux par un convoyeur définissant un circuit fermé, et un contrôleur, chaque dispositif d' analyses biologiques comprenant une région d'échange de portoirs de tubes avec le convoyeur, le convoyeur comprenant au moins un lecteur d'identifiant de portoir de tubes, chaque entrée du système d'analyses biologiques comprenant un lecteur d'identifiant de portoir de tubes, chaque lecteur du convoyeur et chaque lecteur de l'au moins une entrée du système d'analyses biologiques étant agencé pour communiquer un identifiant lu au contrôleur du système d'analyses biologiques, lequel contrôleur est agencé pour appliquer un traitement spécifique à un portoir de tubes identifié par un lecteur du convoyeur et dont l'identifiant n'a pas été lu précédemment par un lecteur de l'au moins une entrée du système d'analyses biologiques.

Ce système d'analyses biologiques est particulièrement avantageux car il permet de gagner en compacité, les entrées et sorties du système étant réalisées par les entrées et sorties des dispositifs qui le composent. De plus, le fait d'avoir plusieurs entrées et plusieurs sorties pour le système permet de mettre en oeuvre des stratégies de gestion du flux qui permettent d'optimiser la charge de travail du personnel de laboratoire.

Selon diverses variantes, l'accessoire selon l'invention peut présenter une ou plusieurs des caractéristiques suivantes :
- le convoyeur comprend autant de lecteurs qu'il y a de régions d'échange de portoirs de tubes,
- le contrôleur est agencé pour appliquer un traitement spécifique dépendant de l'identifiant d'un portoir de tubes devant faire l'objet d'un traitement spécifique,
- le contrôleur est agencé pour appliquer un traitement spécifique avec un degré de priorité différent par rapport aux portoirs de tubes reçus par l'entrée du système d'analyses biologiques qui dépend du traitement spécifique à appliquer,
- le contrôleur est agencé pour faire traiter en priorité un portoir de tubes devant faire l'objet d'un traitement spécifique dont l'identifiant de portoir indique qu'il contient des tubes devant faire l'objet de tests,
- le contrôleur est agencé pour faire traiter un portoir de tubes devant faire l'objet d'un traitement spécifique dont l'identifiant indique qu'il contient des tubes de contrôle avec un degré de priorité dépendant du mode de conservation du contrôle et/ou de la planification des contrôles des dispositifs d'analyses biologiques,
- le contrôleur est agencé pour traiter un portoir de tubes devant faire l'objet d'un traitement spécifique dont l'identifiant indique qu'il contient des tubes de réactif avec un degré de priorité dépendant du mode de conservation du réactif et/ou de la quantité de réactif encore présente dans un ou plusieurs des dispositifs d'analyses biologiques,
- les lecteurs sont des lecteurs optiques ou radiofréquence, et
- chaque dispositif d'analyses biologiques comprend au moins une entrée et une sortie pour des portoirs de tubes, l'entrée d'au moins deux dispositifs d'analyses biologiques formant chacune une entrée du système d'analyses biologiques pour des portoirs de tubes et comprenant chacune un lecteur respectif, et la sortie d'au moins deux dispositifs d'analyses biologiques formant chacune une sortie du système d'analyses biologiques pour des portoirs de tubes, et la région d'échange de chaque dispositif d'analyses biologiques étant distincte de l'entrée et de la sortie de ce dispositif d'analyses biologiques.

L'invention concerne également un procédé d'analyses biologiques, comprenant l'introduction d'au moins un portoir de tubes dans un système d'analyses biologiques tel que décrit précédemment, la lecture d'un identifiant de portoir lorsque celui-ci passe devant un lecteur du convoyeur, et, lorsque cet identifiant n'a pas été lu précédemment par un lecteur de l'au moins une entrée du système d'analyses biologiques, l'application d'un traitement spécifique à ce portoir de tubes.

D'autres caractéristiques et avantages de l'invention apparaîtront mieux à la lecture de la description qui suit, tirée d'exemples donnés à titre illustratif et non limitatif, tirés des dessins sur lesquels :
- la Figure 1 représente une vue en perspective d'un système d'analyses biologiques selon l'invention, et
- la Figure 2 représente une vue de dessus de la Figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

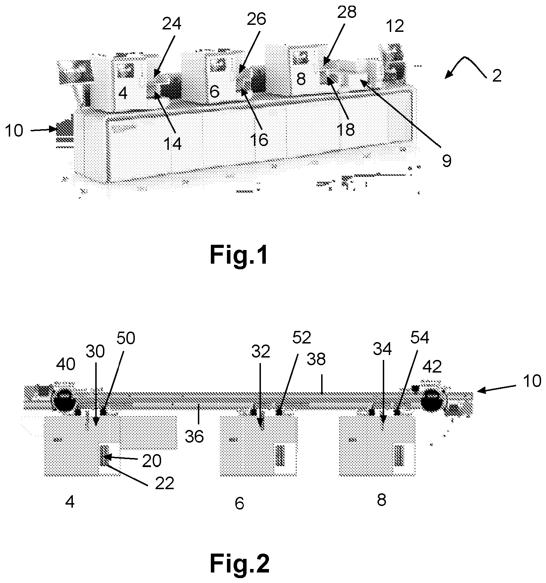

La Figure 1 représente une vue en perspective d'un système d'analyses biologiques 2 selon l'invention, et la Figure 2 est une vue de dessus de la Figure 1. Comme on peut le voir sur cette figure, le système d'analyses biologiques 2 comprend trois dispositifs d'analyses biologiques 4, 6 et 8, un étaleur/colorateur de lames 9, un convoyeur 10 et un contrôleur 12.

Dans l'exemple décrit ici, les dispositifs d'analyses biologiques 4, 6 et 8 sont du type analyseur hématologique. Le dispositif d'analyses biologiques 4 (respectivement 6, 8) comporte une tablette 14 (respectivement 16, 18) qui reçoit des portoirs 20 de tubes 22 à analyser. Le dispositif d'analyses biologiques 4 (respectivement 6, 8) comporte également une tablette 24 (respectivement 26, 28) qui reçoit les portoirs 20 de tubes 22 qui ont fait l'objet d'une analyse. Le dispositif d'analyses biologiques 4 (respectivement 6, 8) comporte également une région d'échange 30 (respectivement 32, 34) qui permet de transférer un portoir 20 sur le convoyeur 10 ou de recevoir un portoir 20 de ce dernier.

Les trois analyseurs hématologiques 4, 6, 8 peuvent mesurer un échantillon de sang contenu dans un tube 22. Chaque appareil prend le tube 22 contenu dans un portoir 20 qui se trouve soit sur une tablette de chargement, soit sur le convoyeur, derrière l'appareil de mesure. Quand la mesure de l'échantillon de sang est complète, l'appareil remet le tube dans un portoir.

L'étaleur/colorateur de lame 9 prépare des lames de sang qui sont destinées à être analysées. Dans un premier temps, un volume de sang est prélevé dans un tube 22 qui se trouve dans un portoir 20. Ensuite, le sang prélevé est déposé sur une lame, étiré sur la lame de façon à obtenir une couche fine, puis séché. L'échantillon est par la suite coloré.

Le convoyeur 10 définit un circuit fermé et comprend dans l' exemple décrit ici une chaîne en forme de boucle comprenant deux chemins 36 et 38. La chaîne 36 est reliée à chacune des régions d'échange 30, 32 et 34, de sorte qu'un portoir 20 est introduit sur le convoyeur 10 ou récupéré depuis celui-ci à partir du chemin 36. Le convoyeur 10 entraîne le chemin 36 dans une direction, et la chaîne 38 dans une direction opposée à la direction d'entraînement du chemin chaîne 36.

Le convoyeur 10 comporte également deux dispositifs de retour 40 et 42 qui sont respectivement disposés en aval du dispositif 4 et en amont du dispositif 8 par rapport au sens d'entraînement du chemin 36.

Le dispositif de retour 40 a pour fonction de transférer un portoir 20 depuis le chemin 36 vers le chemin 38, et le dispositif de retour 42 a pour fonction de transférer un portoir 20 depuis le chemin 36 vers le chemin 38 par rotation à 180°. Ainsi, quelle que soit la région d'échange 30, 32 ou 34 à partir de laquelle un portoir 20 a été introduit sur le convoyeur 10, ce portoir 20 peut être envoyé vers l'un quelconque des dispositifs 4, 6 ou 8 selon des règles de transport. Cette capacité, quels que soient les moyens mis en oeuvre pour la réaliser, caractérise le fait que le convoyeur 10 définit un circuit fermé.

En variante, le convoyeur 10 peut être réalisé sous la forme de deux chaînes 36 et 38 entraînées indépendamment et reliées par les dispositifs de retour 40 et 42.

Ainsi, les tablettes 14, 16 et 18 forment des entrées pour le système 2, les tablettes 24, 26 et 28 forment des sorties pour le système 2, et les régions d'échange 30, 32 et 34 entre les dispositifs 4, 6 et 8 et le convoyeur 10 sont distinctes des entrées et sorties du système 2.

Chaque entrée du système 2 comprend un lecteur adapté pour lire sur les portoirs 20 un identifiant de portoir. Ces lecteurs sont situés dans le boîtier de chaque dispositif d'analyses biologiques 4, 6, 8 à proximité des tablettes 14, 16 et 18. L'identifiant pourrait être utilisé par le contrôleur 12 pour déterminer les opérations et/ou tests à effectuer sur les tubes d'un portoir donné et pour réaliser la gestion du transfert des portoirs entre dispositifs d'analyses biologiques si nécessaire.

Dans l'exemple décrit ici, le convoyeur 10 comprend au niveau de chaque région d'échange 30 (respectivement 32, 34) un lecteur 50 (respectivement 52, 54) similaire aux lecteurs des entrées 14, 16 et 18 afin de permettre d'identifier les portoirs 20 qui sont transportés par le convoyeur 10 et communiquer avec le contrôleur 12 pour déterminer l'action à entreprendre à chaque fois qu'un portoir 20 se trouve devant une région d'échange 30 (respectivement 32, 34). En variante, le convoyeur 10 pourrait comprendre un unique lecteur.

Les lecteurs peuvent être réalisés par tout moyen permettant de récupérer des informations d'identifications des portoirs, par exemple par lecture d'un code optique (code barre ou code QR), ou par lecture d'une étiquette radio (RFID ou autre).

Dans diverses variantes, l'entrée et la sortie d'un ou plusieurs dispositifs peuvent être inversées, ou être réalisées sur une même tablette en étant séparées de manière appropriée. De manière similaire, selon les configurations, la région d'échange pourra être rapprochée de l'entrée et de la sortie d'un ou plusieurs dispositifs, dès lors qu'elles restent bien distinctes les unes des autres. Certaines entrées et/ou sorties pourront être omises.

Dans l'exemple décrit ici, les échantillons contenus dans les tubes 22 d'un portoir 20 pourront faire l'objet d'analyses dans le dispositif d'analyses biologiques dans lequel il a été introduit dans le système 2 avant d'être transmis au convoyeur 10 ou sortir directement par l'une des tablettes 24, 26 ou 28 sans passer par le convoyeur 10, ou être transmis directement depuis l'entrée par laquelle il a été introduit vers la région d'échange du dispositif concerné.

Le contrôleur 12 est dans l'exemple décrit ici un ordinateur qui comprend de manière classique un affichage, un répartiteur, une mémoire et une interface réseau lui permettant de communiquer avec les dispositifs d'analyses biologiques.

La mémoire peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 2, ou sur celle-ci. Ces données peuvent être effacées après que le dispositif ait effectué ses tâches ou conservées.

Le répartiteur accède directement ou indirectement à la mémoire pour mettre en oeuvre les fonctions du contrôleur 12. Il peut être réalisé sous la forme d'un code informatique approprié exécuté sur un ou plusieurs processeurs. Par processeurs, il doit être compris tout processeur adapté au traitement de données informatiques. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison d'un ou plusieurs processeurs et d'un ou plusieurs circuits électroniques peut également être envisagée.

Le contrôleur 12 est relié aux dispositifs d'analyses biologiques 4, 6 et 8 pour connaître toutes les données concernant les analyses réalisées et en cours ainsi que l'état des portoirs 20 reçus dans ces dispositifs, ainsi qu'au convoyeur 10 notamment pour connaître les portoirs 20 reçus sur celui-ci.

Ainsi, le contrôleur 12 peut organiser le flux de portoirs 20 sur l'ensemble du système d'analyses biologiques 2, en ayant accès à toutes les données caractérisant l'état des portoirs 20 en cours de traitement, l'état des analyses en cours et les analyses déjà réalisées, ainsi que les analyses qui sont prévues pour les portoirs 20 reçus aux entrées du système 2.

Le contrôleur 12 est donc en mesure de déterminer un état de charge pour chacun des dispositif d'analyses biologiques 4, 6 et 8, et de commander le transfert de portoirs 20 sur le convoyeur 10 d'un dispositif vers un autre en fonction d'un état de charge des dispositifs, de stratégies de gestion de la charge au niveau du système d'analyses biologiques 2, de la répartition de la charge de travail du personnel interagissant avec le système d'analyses biologiques 2, d'analyses complémentaires nécessaires, de pannes, nombre de dispositifs d'analyse sur la chaine, etc.

Par état de charge, on entend le nombre total de portoirs que reçoit un dispositif d'analyses biologiques ajouté au nombre de portoirs sur le convoyeur qui lui sont destinés. L'état de charge d'un dispositif d'analyses biologiques donné est considéré comme « en surcharge » lorsque ce nombre excède une quantité prédéterminée. Cette quantité prédéterminée peut être définie en fonction de plusieurs paramètres : cadence visée pour le système, nombre d'emplacements libres sur le ou les agitateurs du dispositif concerné, temps moyen pour déplacer un portoir d'un dispositif à un autre, etc.

Le contrôleur 12 a pour fonction de déterminer quels sont les portoirs devant être pris en charge par un autre dispositif d'analyses biologiques que celui sur lequel ils ont été introduits dans le système 2 pour améliorer la cadence et/ou tenir compte des impondérables, ainsi que de déterminer les sorties pour les portoirs qui ont été analysés. Le contrôleur 12 peut donc mettre en oeuvre une ou plusieurs stratégies de gestion de charge courante et une ou plusieurs stratégies de gestion de sortie. De plus, comme on va le voir, la centralisation de la gestion des portoirs par le contrôleur 12 permet de mettre en oeuvre une gestion innovante des portoirs spécifiques devant être traités avec un degré de priorité distinct de celui des tubes d'analyse classiques.

En effet, comme on l'a vu plus haut, chaque portoir 20 qui est introduit dans le système 2 par l'entrée 14, 16 ou 18 est identifié par le lecteur de cette entrée. Cela signifie que tout portoir 20 qui est situé sur le convoyeur 10 et qui a été introduit par l'une de ces entrées présente un identifiant présent dans la mémoire du contrôleur 12. Inversement, cela signifie qu'un portoir 20 dont l'identifiant serait lu par un des lecteurs 50, 52 ou 54 sans être présent dans la mémoire du contrôleur 12 n'a pas été introduit par une des entrées du système 2, mais a été déposé directement sur le convoyeur 10.

Ainsi, le convoyeur 10 peut être utilisé comme entrée pour les portoirs spécifiques, et c'est l'absence de l'identifiant de ces portoirs dans le contrôleur 12 qui permettra de les identifier et de les traiter en priorité.

Dès qu'un portoir spécifique est identifié comme portoir spécifique prioritaire, le contrôleur 12 l'affecte au dispositif d'analyses biologiques du système 2 pouvant réaliser le plus grand nombre de tests pour les tubes de ce portoir. Le portoir spécifique prioritaire est, dans ce cas, prioritaire par définition par rapport aux autres portoirs reçus dans le système 2. En l'envoyant sur le dispositif d'analyses biologiques aptes à réaliser le plus grand nombre de tests prévus pour les tubes qu'il transporte, il est traité plus efficacement car le maximum de tests sur un seul et unique dispositif d' analyses biologiques, diminuant ainsi le temps de convoiement via le convoyeur 10. Ce critère de routage pourra bien sûr être personnalisé, par exemple pour orienter un portoir spécifique vers le dispositif d'analyses biologiques ayant la charge la plus faible, ou pour utiliser un critère associant charge et nombre de tests prévus réalisables. L'introduction du portoir spécifique dans le dispositif d'analyses biologiques qui doit le traiter est prioritaire par rapport à tout autre portoir présent sur le convoyeur 10, ou présent dans l'une des tablettes 14, 16 ou 18. Ainsi, le portoir spécifique sera traité de manière prioritaire au sein du dispositif d'analyses biologiques qui le reçoit.

En plus d'analyses prioritaires, un portoir spécifique peut également être utilisé pour réaliser d'autres types d'opérations spécifiques, comme le contrôle et le réassort en réactifs.

En effet, certains dispositifs d'analyses biologiques nécessitent une validation de leur fonctionnement de manière régulière, ce qui est effectué par l'utilisation de portoirs dits de contrôle comprenant des tubes pour lesquels une valeur test est attendue. Les tests sur le portoir de contrôle permettent de garantir le bon fonctionnement du dispositif d'analyses biologiques. Classiquement, ces tests ne peuvent pas être réalisés « à la volée », et peuvent nécessiter d'arrêter complètement ou en partie le système 2, ce qui fait perdre du temps utile de fonctionnement de ce dernier puisque tous les dispositifs d'analyses biologiques sont bloqués à cause du test d'un ou deux d'entre eux.

La priorité du portoir de contrôle peut être personnalisée par le personnel et peut être effectuée en fonction du type de contrôle. Un réglage par défaut consiste à octroyer au portoir de contrôle une priorité inférieure aux portoirs de tests prioritaires, mais supérieure aux autres portoirs de tests et aux portoirs de réactifs.

Le fait de traiter les portoirs de contrôle comme des portoirs prioritaires permet de limiter le temps d'inactivité du système 2 et d'optimiser encore la cadence.

De plus, les portoirs peuvent être utilisés pour réassortir les dispositifs d'analyses biologiques en réactifs pour certains tests. Classiquement, ces réactifs sont stockés dans des réservoirs dans chaque dispositif d'analyses biologiques et changés directement dans ceux-ci, ou stockés dans des réservoirs à part du système 2 et distribués à la demande directement dans les dispositifs d'analyses biologiques.

Dans l'exemple décrit ici, cette gestion est rendue totalement obsolète par le fait que les réactifs peuvent être transportés sur des portoirs. Ainsi, un gain d'espace conséquent est réalisé puisque les réactifs peuvent être remplacés et déplacés comme nécessaire, sans unité de stockage dédiée et sans non plus arrêter le fonctionnement des dispositifs d'analyses biologiques pour procéder au remplacement.

De plus, il devient possible de partager des réactifs coûteux entre les divers dispositifs d'analyses biologiques au gré des besoins. Enfin, ces opérations sont gérées par le contrôleur 12, ce qui signifie qu'il est possible de prioriser les portoirs spécifiques de réactifs en fonction d'un état des tests en cours.

Par exemple, leur priorité peut varier :
- en fonction du mode de conservation du réactif. S'il s'agit d'un réactif sensible, il sera prioritaire aux portoirs de tests, s'il s'agit d'un réactif ne nécessitant pas de mesures spéciales de conservation, il sera moins prioritaire qu'un portoir de tests,
- en fonction du besoin. Une valeur représentant le nombre de tests restant avant l'approvisionnement en réactif est définie. Si le nombre de tests possibles sans approvisionnement en réactif est supérieur à la valeur prédéfinie, le portoir spécifique contenant les réactifs n'est pas prioritaire aux portoirs de tests. En revanche, si le nombre de tests possibles sans approvisionnement en réactif est inférieur à la valeur prédéfinie, le portoir spécifique contenant les réactifs est prioritaire aux portoirs de tests.

En outre, le contrôleur 12 peut également gérer la priorité des portoirs spécifiques en sortie. Par exemple, il peut commander une sortie le plus rapidement possible des portoirs spécifiques, dans le but de maîtriser des problèmes de conservation (échantillons de contrôle, réactifs, etc.) et d'optimiser le temps de traitement d'un portoir spécifique de tests dans le cas où des analyses complémentaires seraient à réaliser.

## Revendications

1. Système d'analyses biologiques, comprenant au moins une entrée et une sortie, au moins deux dispositifs d'analyses biologiques (4, 6, 8) reliés entre eux par un convoyeur (10) définissant un circuit fermé, et un contrôleur (12),
chaque dispositif d'analyses biologiques (4, 6, 8) comprenant une région d'échange (30, 32, 34) de portoirs (20) de tubes (22) avec le convoyeur (10), le convoyeur (10) comprenant au moins un lecteur (50, 52, 54) d'identifiant de portoir (20) de tubes (22), chaque entrée du système d'analyses biologiques comprenant un lecteur d'identifiant de portoir (20) de tubes (22), chaque lecteur (50, 52, 54) du convoyeur (10) et chaque lecteur de l'au moins une entrée du système d'analyses biologiques étant agencé pour communiquer un identifiant lu au contrôleur (12) du système d'analyses biologiques, lequel contrôleur (12) est agencé pour appliquer un traitement spécifique à un portoir (20) de tubes (22) identifié par un lecteur (50, 52, 54) du convoyeur (10) et dont l'identifiant n'a pas été lu précédemment par un lecteur de l'au moins une entrée du système d'analyses biologiques.

2. Système selon la revendication 1, dans lequel le convoyeur (10) comprend autant de lecteurs (50, 52, 54) qu'il y a de régions d'échange (30, 32, 34) de portoirs (20) de tubes (22).

3. Système selon la revendication 1 ou 2, dans lequel le contrôleur (12) est agencé pour appliquer un traitement spécifique dépendant de l'identifiant d'un portoir (20) de tubes (22) devant faire l'objet d'un traitement spécifique.

4. Système selon la revendication 3, dans lequel le contrôleur (12) est agencé pour appliquer un traitement spécifique avec un degré de priorité différent par rapport aux portoirs (20) de tubes (22) reçus par l'entrée du système d'analyses biologiques qui dépend du traitement spécifique à appliquer.

5. Système selon l'une des revendications précédentes, dans lequel le contrôleur (12) est agencé pour faire traiter en priorité un portoir (20) de tubes (22) devant faire l'objet d'un traitement spécifique dont l'identifiant de portoir (20) indique qu'il contient des tubes (22) devant faire l'objet de tests.

6. Système selon l'une des revendications précédentes, dans lequel le contrôleur (12) est agencé pour faire traiter un portoir (20) de tubes (22) devant faire l'objet d'un traitement spécifique dont l'identifiant indique qu'il contient des tubes (22) de contrôle avec un degré de priorité dépendant du mode de conservation du contrôle et/ou de la planification des contrôles des dispositifs d'analyses biologiques (4, 6, 8).

7. Système selon l'une des revendications précédentes, dans lequel le contrôleur (12) est agencé pour traiter un portoir (20) de tubes (22) devant faire l'objet d'un traitement spécifique dont l'identifiant indique qu'il contient des tubes (22) de réactif avec un degré de priorité dépendant du mode de conservation du réactif et/ou de la quantité de réactif encore présente dans un ou plusieurs des dispositifs d'analyses biologiques (4, 6, 8).

8. Système selon l'une des revendications précédentes, dans lequel les lecteurs (50, 52, 54) sont des lecteurs optiques ou radiofréquence.

9. Système selon l'une des revendications précédentes, dans lequel chaque dispositif d'analyses biologiques (4, 6, 8) comprend au moins une entrée (14, 16, 18) et une sortie (24, 26, 28) pour des portoirs (20) de tubes (22), l'entrée (14, 16, 18) d'au moins deux dispositifs d'analyses biologiques (4, 6, 8) formant chacune une entrée du système d'analyses biologiques pour des portoirs (20) de tubes (22) et comprenant chacune un lecteur respectif, et la sortie d'au moins deux dispositifs d'analyses biologiques (24, 26, 28) formant chacune une sortie du système d'analyses biologiques pour des portoirs (20) de tubes (22), et la région d'échange (30, 32, 34) de chaque dispositif d'analyses biologiques (4, 6, 8) étant distincte de l'entrée (14, 16, 18) et de la sortie (24, 26, 28) de ce dispositif d'analyses biologiques (4, 6, 8).

10. Procédé d'analyses, comprenant l'introduction d'au moins un portoir (20) de tubes (22) dans un système d'analyses biologiques selon l'une des revendications précédentes, la lecture d'un identifiant de portoir (20) lorsque celui-ci passe devant un lecteur (50, 52, 54) du convoyeur (10), et, lorsque cet identifiant n'a pas été lu précédemment par un lecteur de l'au moins une entrée du système d'analyses biologiques, l'application d'un traitement spécifique à ce portoir (20) de tubes (22).

## Patentansprüche

1. System für biologische Analysen, umfassend mindestens einen Eingang und einen Ausgang, mindestens zwei biologische Analysevorrichtungen (4, 6, 8), die durch einen Förderer (10), der einen geschlossenen Kreislauf definiert, miteinander verbunden sind, und eine Steuerung (12),
wobei jede biologische Analysevorrichtung (4, 6, 8) einen Austauschbereich (30, 32, 34) von Trägereinrichtungen (20) für Röhrchen (22) mit dem Förderer (10) umfasst, der Förderer (10) mindestens ein Lesegerät (50, 52, 54) für eine Kennung einer Trägereinrichtung (20) für Röhrchen (22) umfasst, jeder Eingang des Systems für biologische Analysen ein Lesegerät für eine Kennung einer Trägereinrichtung (20) für Röhrchen (22) umfasst, jedes Lesegerät (50, 52, 54) des Förderers (10) und jedes Lesegerät des mindestens einen Eingangs des Systems für biologische Analysen angeordnet ist, um eine gelesene Kennung an die Steuerung (12) des Systems für biologische Analysen zu kommunizieren, wobei die Steuerung (12) angeordnet ist, um eine spezielle Behandlung auf eine Trägereinrichtung (20) für Röhrchen (22) anzuwenden, die von einem Lesegerät (50, 52, 54) des Förderers (10) identifiziert wird, und deren Kennung zuvor von einem Lesegerät des mindestens einen Eingangs des Systems für biologische Analysen nicht gelesen wurde.

2. System nach Anspruch 1, wobei der Förderer (10) so viele Lesegeräte (50, 52, 54) umfasst, wie es Austauschbereiche (30, 32, 34) von Trägereinrichtungen (20) für Röhrchen (22) gibt.

3. System nach Anspruch 1 oder 2, wobei die Steuerung (12) angeordnet ist, um eine spezielle Behandlung anzuwenden, die von der Kennung einer Trägereinrichtung (20) für Röhrchen (22) abhängig ist, die einer speziellen Behandlung zu unterziehen ist.

4. System nach Anspruch 3, wobei die Steuerung (12) angeordnet ist, um eine spezielle Behandlung mit einem anderen Prioritätsgrad im Vergleich zu denjenigen Trägereinrichtungen (20) für Röhrchen (22) anzuwenden, die vom Eingang des Systems für biologische Analysen empfangen werden, der von der speziellen anzuwendenden Behandlung abhängig ist.

5. System nach einem der vorstehenden Ansprüche, wobei die Steuerung (12) angeordnet ist, um vorrangig eine Trägereinrichtung (20) für Röhrchen (22) behandeln zu lassen, die einer spezifischen Behandlung zu unterziehen ist, deren Kennung der Trägereinrichtung (20) anzeigt, dass es Röhrchen (22) enthält, die zu testen sind.

6. System nach einem der vorstehenden Ansprüche, wobei die Steuerung (12) angeordnet ist, um eine Trägereinrichtung (20) für Röhrchen (22), die einer speziellen Behandlung zu unterziehen ist, behandeln zu lassen, deren Kennung anzeigt, dass sie Kontrollröhrchen (22) mit einem Prioritätsgrad enthält, der von der Konservierungsart der Kontrolle und/oder der Planung der Kontrollen der biologischen Analysevorrichtungen (4, 6, 8) abhängig ist.

7. System nach einem der vorstehenden Ansprüche, wobei die Steuerung (12) angeordnet ist, um eine Trägereinrichtung (20) für Röhrchen (22) zu behandeln, die einer speziellen Behandlung zu unterziehen ist, deren Kennung anzeigt, dass sie Röhrchen (22) mit eine Reagens mit einem Prioritätsgrad enthält, der von der Konservierungsart des Reagens und/oder der Menge an Reagens abhängig ist, die noch in einer oder mehreren der biologischen Analysevorrichtungen (4, 6, 8) vorhanden ist.

8. System nach einem der vorstehenden Ansprüche, wobei die Lesegeräte (50, 52, 54) optische oder Funkfrequenzlesegeräte sind.

9. System nach einem der vorstehenden Ansprüche, wobei jede biologische Analysevorrichtung (4, 6, 8) mindestens einen Eingang (14, 16, 18) und einen Ausgang (24, 26, 28) für Trägereinrichtungen (20) für Röhrchen (22) umfasst, wobei der Eingang (14, 16, 18) von mindestens zwei biologischen Analysevorrichtungen (4, 6, 8) jeweils einen Eingang des Systems für biologische Analysen für Trägereinrichtungen (20) für Röhrchen (22) bildet und jeweils ein jeweiliges Lesegerät umfasst, und der Ausgang von mindestens zwei biologischen Analysegeräten (24, 26, 28) jeweils einen Ausgang des Systems für biologische Analysen für Trägereinrichtungen (20) für Röhrchen (22) bildet, und der Austauschbereich (30, 32, 34) einer jeden biologischen Analysevorrichtung (4, 6, 8) von dem Eingang (14, 16, 18) und dem Ausgang (24, 26, 28) dieser biologischen Analysevorrichtung (4, 6, 8) getrennt ist.

10. Analyseverfahren, umfassend das Einführen von mindestens einer Trägereinrichtung (20) für Röhrchen (22) in ein System für biologische Analysen nach einem der vorstehenden Ansprüche, das Lesen einer Kennung einer Trägereinrichtung (20), wenn diese an einem Lesegerät (50, 52, 54) des Förderers (10) vorbeiläuft, und, wenn diese Kennung zuvor von einem Lesegerät des mindestens einen Eingangs des Systems für biologische Analysen nicht gelesen wurde, das Anwenden einer speziellen Behandlung auf diese Trägereinrichtung (20) für Röhrchen (22) .

## Claims

1. A biological analysis system comprising at least one inlet and one outlet, at least two biological analysis devices (4, 6, 8) connected to one another by a conveyor (10) defining a closed circuit, and a controller (12), each biological analysis device (4, 6, 8) comprising a region (30, 32, 34) for the exchange of tube (22)-holding racks (20) with the conveyor (10), the conveyor (10) comprising at least one reader (50, 52, 54) of an identifier of a tube (22)-holding rack (20), each inlet of the biological analysis system comprising a reader of an identifier of a tube (22)-holding rack (20), each reader (50, 52, 54) of the conveyor (10) and each reader or the at least one inlet of the biological analysis system being designed to communicate an identifier it has read to a controller (12) of the biological analysis system, which controller (12) is designed to apply a specific treatment to a tube (22)-holding rack (20) identified by a reader (50, 52, 54) of the conveyor (10) and the identifier of which has not previously been read by a reader of the at least one inlet of the biological analysis system.

2. The system as claimed in claim 1, wherein the conveyor (10) comprises as many readers (50, 52, 54) as there are exchange regions (30, 32, 34) for exchanging tube (22)-holding racks (20).

3. The system as claimed in claim 1 or 2, wherein the controller (12) is designed to apply a specific treatment dependent on the identifier of a tube (22)-holding rack (20) that is to undergo specific treatment.

4. The system as claimed in claim 3, wherein the controller (12) is designed to apply a specific treatment with a different level of priority compared with the tube (22)-holding racks (20) received by the inlet of the biological analysis system which is dependent on the specific treatment that is to be applied.

5. The system as claimed in one of the preceding claims, wherein the controller (12) is designed to treat, as a matter of priority, a tube (22)-holding rack (20) that is to undergo a specific treatment and the rack (20) identifier of which indicates that it contains tubes (22) that are to undergo tests.

6. The system as claimed in one of the preceding claims, wherein the controller (12) is designed to treat a tube (22)-holding rack (20) that is to undergo specific treatment and the identifier of which indicates that it contains control tubes (22) with a level of priority that is dependent on the way in which the control is preserved and/or on the scheduling of the checks of the biological analysis devices (4, 6, 8).

7. The system as claimed in one of the preceding claims, wherein the controller (12) is designed to treat a tube (22)-holding rack (20) that is to undergo specific treatment and the identifier of which indicates that it contains tubes (22) of reagent with a level of priority that is dependent on the way in which the reagent is preserved and/or on the quantity of reagent present in one or more of the biological analysis devices (4, 6, 8).

8. The system as claimed in one of the preceding claims, wherein the readers (50, 52, 54) are optical or radiofrequency readers.

9. The system as claimed in one of the preceding claims, wherein each biological analysis device (4, 6, 8) comprises at least one inlet (14, 16, 18) and one outlet (24, 26, 28) for tube (22)-holding racks (20), the inlet (14, 16, 18) of at least two biological analysis devices (4, 6, 8) each forming an inlet for tube (22)-holding racks (20) to the biological analysis system and each comprising a respective reader, and the outlet of at least two biological analysis devices (24, 26, 28) each forming an outlet for tube (22)-holding racks (20) from the biological analysis system, and the exchange region (30, 32, 34) of each biological analysis device (4, 6, 8) being distinct from the inlet (14, 16, 18) and from the outlet (24, 26, 28) of this biological analysis device (4, 6, 8).

10. A biological analysis method, comprising introducing at least one tube (22)-holding rack (20) into a biological analysis system as claimed in one of the preceding claims, reading a rack identifier as this rack (20) moves past a reader (50, 52, 54) of the conveyor (10) and, when this identifier has not been read beforehand by a reader of the at least one inlet of the biological analysis system, applying a specific treatment to this tube (22)-holding rack (20).
